# FASCICULE DE BREVET EUROPEEN

(11) **EP 2 809 535 B1**
(45) Date de publication et mention de la délivrance du brevet: **05.06.2019**
(21) Numéro de dépôt: 13702969.0
(22) Date de dépôt: 29.01.2013
(51) Int. Cl.: B60H 1/00, F28D 1/053, F28F 9/02

(54) **ENSEMBLE COMPRENANT UN ÉCHANGEUR DE CHALEUR ET UN SUPPORT SUR LEQUEL LEDIT ÉCHANGEUR EST MONTÉ**
ANORDNUNG MIT EINEM WÄRMETAUSCHER UND HALTERUNG MIT DEM DARAUF MONTIERTEN WÄRMETAUSCHER
ASSEMBLY INCLUDING A HEAT EXCHANGER AND A MOUNTING ON WHICH SAID EXCHANGER IS MOUNTED

(30) Priorité: 30.01.2012 FR 1250840
(43) Date de publication de la demande: 10.12.2014
(73) Titulaire: Valeo Systemes Thermiques, 78320 Le Mesnil-Saint-Denis (FR)
(72) Inventeur: CITTI, Isabelle, F-51390 Rosnay (FR); BEAUVIS, Régis, F-92150 Suresnes (FR); BENOUALI, Jugurtha, F-92140 Clamart (FR)
(74) Mandataire: Metz, Gaëlle
(86) Numéro de dépôt international: PCT/EP2013/051650
(87) Numéro de publication internationale: WO 2013/113686

(56) Documents cités:
- EP-A2- 0 887 611
- EP-A2- 1 167 910
- DE-A1- 10 247 609
- FR-A- 1 265 756
- FR-A1- 2 958 019

## Description

L'invention est du domaine des échangeurs de chaleur, par exemple les échangeurs de chaleur apte à fonctionner avec un circuit de climatisation réversible destiné, notamment, à chauffer ou à refroidir l'habitacle d'un véhicule.

Dans les véhicules comprenant un moteur à combustion, le confort thermique est assuré d'une part, pour les besoins de chauffage, grâce à l'utilisation de la chaleur du moteur et d'autre part, pour les besoins de refroidissements, grâce à un système d'air conditionné fonctionnant avec un compresseur mécanique.

En revanche pour des véhicules électriques, il n'est pas possible d'utiliser la chaleur dégagée par le moteur thermique, la seule source d'énergie disponible à l'intérieur du véhicule étant une énergie électrique. C'est donc cette énergie électrique qui est utilisée pour assurer les besoins en chauffage et en refroidissement de l'habitacle.

Il est ainsi connu d'assurer le confort thermique dans les véhicules électriques grâce à un système d'air conditionné classique fonctionnant avec un compresseur électrique pour les besoins de refroidissement et grâce à un radiateur électrique pour les besoins en chauffage. Cependant, de tels radiateurs consomment beaucoup d'énergie électrique et, dans le but d'augmenter l'autonomie des véhicules électrique, il est avantageux de produire l'énergie thermique, pour le chauffage et le refroidissement, grâce à un unique système de climatisation présentant une meilleure efficacité.

Il est connu d'utiliser pour cela des circuits de climatisation réversible, c'est-à-dire capable de refroidir et de chauffer l'habitacle du véhicule. Ces circuits de climatisation réversibles consomment en effet moins d'électricité que les radiateurs et les systèmes d'air conditionné conventionnels, à performances thermiques égales.

Ainsi, les boucles de climatisation dans lesquelles sont disposés ces échangeurs de chaleur sont agencées pour fonctionner selon deux modes distincts, le premier, dit « refroidissement », permet de refroidir l'habitacle et le deuxième, dit « chauffage », permet de chauffer l'habitacle. Un échangeur de chaleur de la boucle de climatisation, situé en face avant du véhicule, est alors amené à fonctionner alternativement en tant que condenseur dans le mode « refroidissement », et en tant qu'évaporateur dans le mode « chauffage ».

Les échangeurs de face avant utilisés dans la boucle de climatisation sont en général optimisé pour un seul et unique mode de fonctionnement : le mode « refroidissement ».

Les documents FR 1 265 756 A et EP 1 167 910 A2 divulguent des ensembles d'échangeur de chaleur avec support d'un type connu. type d'échangeur de chaleur n'est cependant pas optimisé pour le mode « chauffage ». Les conséquences de ce manque d'optimisation font que pour un échangeur de chaleur, toute la surface d'échange avec le flux d'air est utilisée pour l'échange de chaleur dans le mode « refroidissement », mais presque 30% de cette surface ne l'est pas dans le mode « chauffage ». De plus, la perte de charge interne n'est pas adaptée à un fonctionnement en mode « chauffage », ces pertes de charges impliquant des efforts mécaniques trop important pour le compresseur.

L'invention vise donc à améliorer la situation.

Elle propose pour cela un ensemble comprenant un échangeur de chaleur et un support sur lequel ledit échangeur est monté, suivant les caractéristiques de la revendication 1, et une une boucle de climatisation suivant les caractéristiques de la revendication 8.

Grâce à l'invention, lorsque l'échangeur de chaleur fonctionne en mode chauffage, c'est-à-dire en tant qu'évaporateur, le fluide réfrigérant est apte à entrer dans l'échangeur par la première tubulure, située en dessous de la deuxième tubulure, avant de parcourir la première passe puis la deuxième passe, située au dessus de la première passe, pour finalement sortir de l'échangeur de chaleur au niveau de la deuxième tubulure. Pendant son trajet dans l'échangeur de chaleur, le fluide réfrigérant se réchauffe et s'évapore, le gaz étant plus léger que le liquide, il a tendance à monter par rapport au liquide, suivant ainsi le sens de circulation du fluide réfrigérant dans l'échangeur entre les deux passes, c'est-à-dire ici de bas en haut. La circulation du fluide réfrigérant est ainsi homogénéisée dans les deux passes de l'échangeur, le gaz aidant à mieux répartir le liquide dans la deuxième passe. En mode de refroidissement, c'est-à-dire quand l'échangeur fonctionne en tant que condenseur, le fluide réfrigérant entre également par le bas. Il est cependant sous forme de gaz et remonte dans la deuxième passe dans un état diphasique, c'est-à-dire en partie liquide et en partie gazeux. Ce sens de circulation ne perturbe pas ou peu l'efficacité du condenseur par rapport à son fonctionnement connu qui est de circuler en sens inverse dans l'échangeur, c'est-à-dire d'entrer par le haut de l'échangeur et de sortir par le bas de ce dernier. Lorsque l'échangeur fonctionne en mode condenseur, la circulation du fluide réfrigérant du bas vers le haut ne pénalise pas l'efficacité du condenseur. Dans ce mode de fonctionnement, le débit massique de fluide réfrigérant est plus élevé qu'en mode évaporateur, à titre d'exemple de l'ordre de deux à trois fois plus élevé. Cela se traduit par un moindre voire une absence d'effet de la gravité de fluide réfrigérant sur l'efficacité du condenseur.

L'invention permet ainsi d'améliorer l'uniformité, c'est-à-dire l'homogénéité et la régularité, de l'écoulement du fluide à l'intérieur de l'échangeur de chaleur. Elle permet en outre de réaliser un bon compromis en améliorant considérablement les performances thermiques en mode évaporateur, c'est-à-dire le mode « chauffage », tout en limitant la dégradation des performances thermique en mode condenseur, c'est-à-dire le mode « refroidissement ».

Suivant l'invention, la première tubulure se situe dans un quart inférieur du premier collecteur selon l'axe vertical.

Suivant l'invention, la première et la deuxième tubulures sont alignées sur le premier axe.

On entend ici par un plan sensiblement vertical, un plan définissant un angle inférieur à 15 degrés par rapport à la verticale, d'un côté ou de l'autre d'un plan vertical. L'échangeur de chaleur est notamment situé en face avant d'un véhicule automobile. Autrement dit, l'échangeur de chaleur est situé sur une partie du support située en face avant du véhicule.

Selon un aspect de l'invention, le nombre de passes de circulation du fluide réfrigérant est spécifiquement égal à deux. L'invention permet ainsi de réduire la perte de charge que subit le fluide réfrigérant lors de son passage dans l'échangeur en mode évaporateur sans trop dégrader les performances thermiques en mode condenseur.

Suivant l'invention, la deuxième tubulure se situe dans le quart inférieur du deuxième collecteur selon le premier axe. La deuxième tubulure étant située dans une partie basse du deuxième collecteur selon ce premier axe, le fluide réfrigérant, entraîné par la pesanteur vers la partie basse du deuxième collecteur, peut sortir de l'échangeur par la deuxième tubulure de manière plus aisée, les pertes de charge interne étant ainsi limitées. Une telle disposition des tubulures par rapport aux parties du collecteur permet d'évacuer facilement l'huile présente dans le fluide réfrigérant. L'effet de la pesanteur sur l'huile a ainsi tendance à la déplacer vers le bas des parties du collecteur ce qui réduit tout risque de rétention de celle-ci dans l'échangeur.

Selon un exemple de réalisation de l'invention, la première passe occupe moins de 50% de ladite surface d'échange. Avantageusement, la première passe occupe sensiblement 30% de ladite surface d'échange.

Selon un aspect de l'invention, le premier collecteur et le deuxième collecteur définissent une même boîte collectrice.

Dans une forme particulière de l'invention, ledit support est une caisse ou un châssis de véhicule automobile.

Selon une alternative, ledit support est un module d'échangeur de chaleur. Le module d'échangeur de chaleur est monté, par exemple sur une caisse ou un châssis de véhicule automobile.

Le but de l'invention est donc de réunir les règles d'agencement des tubulures d'entrées/sorties, de la direction du fluide réfrigérant, et de la répartition des passes qui présentent la performance optimum pour être utilisé en tant qu'évaporateur et en tant que condenseur.

L'invention concerne aussi une boucle de climatisation apte à fonctionner dans un premier mode dit de refroidissement d'un habitacle de véhicule et dans un deuxième mode dit de chauffage de l'habitacle de véhicule, ladite boucle de climatisation étant parcourue par un fluide réfrigérant et comprenant un échangeur intérieur de chaleur fonctionnant en évaporateur, un compresseur, un organe de détente et un ensemble tel que décrit précédemment.

Selon une variante préférée de l'invention, le fluide réfrigérant entre par la première tubulure à la fois en mode de chauffage et en mode de refroidissement.

Alternativement, le fluide réfrigérant entre par la première tubulure en mode de chauffage et par la deuxième tubulure mode de refroidissement.

D'autres caractéristiques, détails et avantages de l'invention ressortiront plus clairement à la lecture de la description donnée ci-après à titre indicatif en relation avec des dessins dans lesquels :
- la figure 1 est une vue schématique en plan d'une boucle de climatisation en mode refroidissement comprenant un échangeur selon l'invention,
- la figure 2 est une vue schématique en plan de la boucle de climatisation illustrée à la figure 1 mais fonctionnant en mode chauffage et
- la figure 3 est une vue schématique en plan de l'échangeur de chaleur selon l'invention.

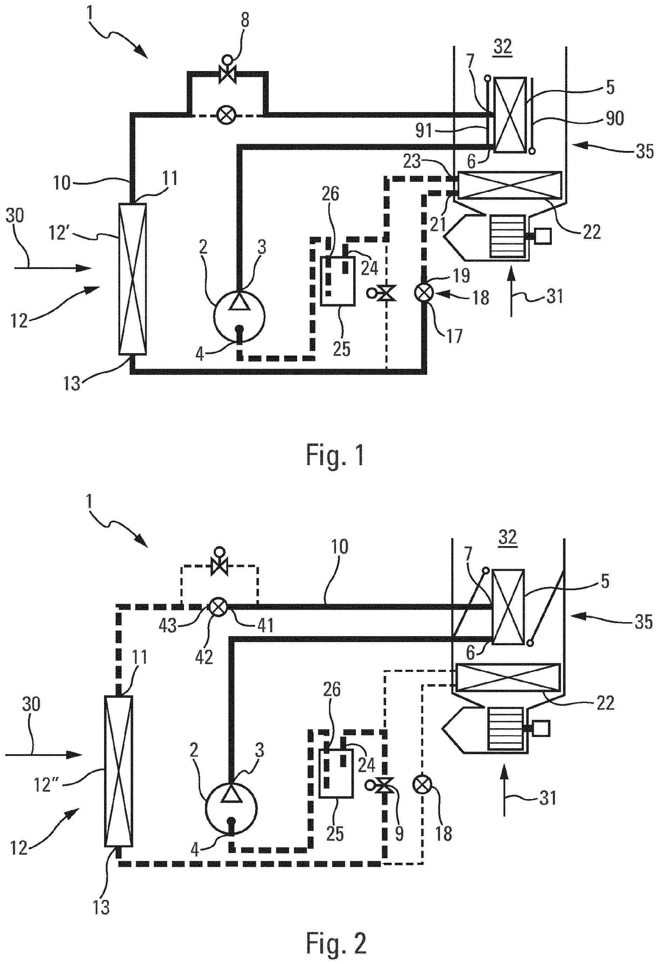

La figure 1 représente une boucle 1 de climatisation d'un véhicule selon l'invention fonctionnant en mode refroidissement. Une telle boucle 1 comprend des conduits 10 définissant un circuit à l'intérieur duquel circule un fluide réfrigérant, également appelé fluide frigorigène. La boucle 1 comprend un compresseur 2, notamment électrique, dont la fonction est de mettre en circulation le fluide réfrigérant au sein du circuit. Le compresseur 2 comprime et élève la température du fluide réfrigérant qui est alors sous forme gazeuse.

Une sortie 3 du compresseur est raccordée à une entrée 6 d'un premier échangeur de chaleur 5. Un tel premier échangeur de chaleur 5 est un échangeur intérieur, en ce sens qu'il modifie la température d'un flux d'air 31 envoyé dans l'habitacle d'un véhicule. En mode de refroidissement, le premier échangeur 5 n'échange pas de chaleur avec d'autres fluides et sert juste de conduit de circulation au fluide réfrigérant. Il est ainsi isolé du flux d'air 31 au moyen de deux volets 90 et 91 qui empêche que le corps d'échange de ce premier échangeur soit traversé par ce flux d'air. Une sortie 7 du premier échangeur est raccordée, toujours en mode de refroidissement, à une première vanne 8, notamment deux-voies, qui lui permet d'être raccordée directement à une entrée 11 d'un deuxième échangeur de chaleur 12. Ce deuxième échangeur 12 est agencé sur le véhicule, par exemple au niveau de la face avant de ce dernier. C'est en particulier le deuxième échangeur 12 que vise l'invention. Le deuxième échangeur 12 fonctionne ici en tant que condenseur 12'. La fonction de ce dernier est de réaliser un échange thermique entre un flux d'air extérieur 30 qui passe à son travers et le fluide réfrigérant qui circule dans le condenseur 12'. On assure ainsi une condensation et un premier refroidissement du fluide réfrigérant.

Une sortie 13 du deuxième échangeur de chaleur 12 est, toujours dans le mode de refroidissement de l'habitacle, raccordée à une entrée 17 d'un premier moyen de détente 18. Le moyen de détente 18 a pour fonction d'abaisser la pression du fluide réfrigérant lors de la mise en oeuvre du cycle thermodynamique qui prend place dans le circuit. Ce moyen de détente 18 est par exemple un orifice à section fixe, un détendeur à commande thermostatique ou encore un détendeur à commande électronique.

Une sortie 19 du moyen de détente 18 est raccordée à une entrée 21 d'un troisième échangeur de chaleur 22, ici un évaporateur, destiné à refroidir un flux d'air intérieur 31 qui le traverse, par échange thermique avec le fluide réfrigérant. Le flux d'air intérieur 31 est celui qui est envoyé dans l'habitacle 32 en vue de refroidir ce dernier. Le troisième échangeur de chaleur 22 est monté dans une installation de ventilation, chauffage et/ou climatisation représentée symboliquement par la référence 35. En parcourant ce troisième échangeur 22, le fluide réfrigérant capte les calories présentes dans le flux d'air intérieur 31 et est donc réchauffé par ce dernier. On notera que le premier échangeur de chaleur 5 est également installé à l'intérieur de l'installation de ventilation, chauffage et/ou climatisation 35, notamment en aval du troisième échangeur de chaleur 22 selon le sens de déplacement du flux d'air intérieur 31.

Une sortie 23 du troisième échangeur de chaleur 22 est raccordée à une entrée 24 d'un dispositif de stockage 25. Il s'agit ici d'un accumulateur qui est apte à séparer les parties liquide et gazeuse du fluide réfrigérant afin de protéger le compresseur en alimentant ce dernier uniquement d'un fluide réfrigérant à l'état gazeux. Une sortie 26 du dispositif de stockage 25 est raccordée à l'entrée 4 du compresseur 3 et la boucle de climatisation est revenue à son point de départ.

La figure 2 décrit la même boucle de climatisation que celle décrite à la figure 1 mais fonctionnant selon le mode chauffage. Selon ce mode de fonctionnement, le fluide réfrigérant sort du compresseur 3 et entre dans le premier échangeur 5 monté dans l'installation de ventilation, chauffage et/ou climatisation 35. Le fluide réfrigérant échange alors de la chaleur avec le flux d'air intérieur 31. La fonction du premier échangeur 5 est ici de dissiper les calories présentes dans le fluide réfrigérant dans le flux d'air intérieur 31 qui va pouvoir ainsi se réchauffer et permettre le chauffage de l'habitacle 32 du véhicule. Au cours de cette étape, le fluide réfrigérant est donc refroidi.

En mode chauffage la première vanne 8 est fermée et la sortie 7 du premier échangeur est directement raccordée à une entrée 41 d'un deuxième moyen de détente 42, par exemple, identique au premier moyen de détente 18 et remplissant la même fonction que ce dernier. Le deuxième moyen de détente 42 abaisse donc la pression du fluide réfrigérant et une sortie 43 du deuxième moyen de détente 42 est raccordée à l'entrée 11 du deuxième échangeur 12. Le flux d'air extérieur 30 traversant le deuxième échangeur 12 réchauffe le fluide réfrigérant passant à l'intérieur du deuxième échangeur. Le deuxième échangeur 12 est ici un évaporateur 12".

Le fluide réfrigérant est ensuite dirigé directement vers l'entrée 24 du moyen de stockage 25 par l'intermédiaire d'une deuxième vanne 9, notamment deux-voies. Le fluide réfrigérant ne passe donc pas dans ce cas par le troisième échangeur 22.

Le fluide réfrigérant sort ensuite du moyen de stockage 25 avant d'entrer dans le compresseur 2 par son entrée 4 comme vu précédemment.

L'installation de ventilation, chauffage et/ou climatisation fonctionne ainsi selon au moins un mode de chauffage et/ou un mode de refroidissement. En revanche, le fluide réfrigérant circule dans un même sens dans le circuit lors de la mise en oeuvre de ces deux modes.

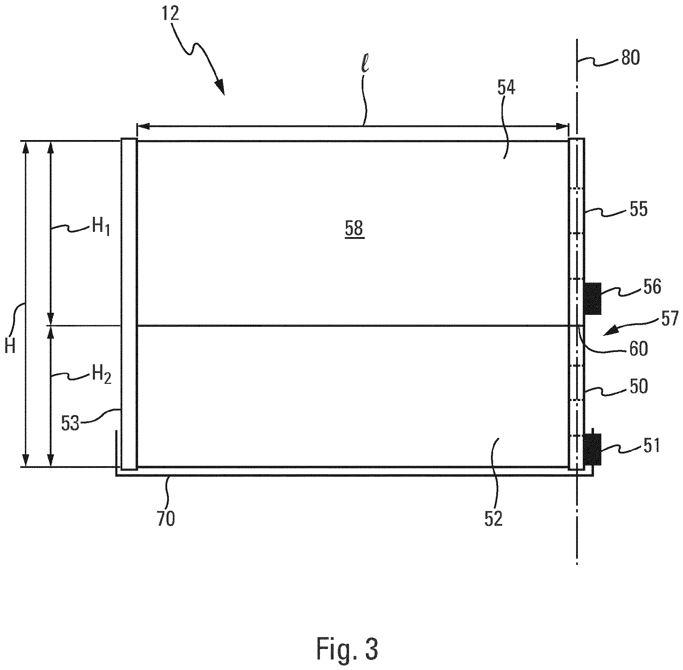

La figure 3 représente un échangeur de chaleur selon l'invention, notamment situé en face avant du véhicule, c'est-à-dire le deuxième échangeur 12 des figures 1 et 2. Ce deuxième échangeur de chaleur 12 est notamment monté sur un support 70, le deuxième échangeur 12 et le support 70 formant un ensemble conforme à l'invention.

Un tel deuxième échangeur 12 comprend un collecteur d'entrée, dit premier collecteur 50, destiné à collecter le fluide réfrigérant en entrée du deuxième échangeur 12 et à le répartir dans un faisceau constitutif de l'échangeur de chaleur selon l'invention. Ce premier collecteur 50 est muni d'une première tubulure 51 qui raccorde le deuxième échangeur 12 au circuit de circulation du fluide réfrigérant, notamment aux conduits référencés 10 sur la figure 1. Le fluide réfrigérant entre donc dans le deuxième échangeur 12 par la première tubulure 51, puis il pénètre dans le premier collecteur 50 qui le répartit dans une première passe 52 de circulation du fluide réfrigérant que comprend le deuxième échangeur 12.

La première passe 52 débouche selon une première extrémité longitudinale, située à droite sur la figure 3, dans le premier collecteur 50 et selon une deuxième extrémité longitudinale, située à gauche sur la figure 3, dans une deuxième boîte collectrice 53. Le fluide réfrigérant peut alors être récolté par la deuxième boîte collectrice 53 et être distribué, toujours par la deuxième boîte collectrice 53, dans une deuxième passe 54 de circulation du fluide réfrigérant. La deuxième passe 54 est située au dessus de la première passe 52 selon un plan sensiblement vertical.

De manière avantageuse, un tel plan peut être parfaitement vertical.

La première passe 52 et la deuxième passe 54 s'étendent dans un même plan, dit plan sensiblement vertical. Elles définissent ensemble une surface d'échange de chaleur 58 avec le flux d'air extérieur, cette surface d'échange s'étendant dans le plan sensiblement vertical. La deuxième passe 54 débouche selon une deuxième extrémité longitudinale, située à gauche sur la figure 3, dans la deuxième boîte collectrice 53 et selon une première extrémité longitudinale, située à droite sur la figure 3, dans un collecteur de sortie du fluide, dit deuxième collecteur 55.

Le deuxième collecteur 55 collecte le fluide réfrigérant arrivant de la deuxième passe 54. De la même manière que le premier collecteur 50, le deuxième collecteur est muni d'une tubulure de sortie, dite deuxième tubulure 56. La deuxième tubulure 56 permettant cette fois au fluide réfrigérant de sortir du deuxième échangeur 12 et de continuer son parcours dans la boucle de climatisation comme décrit précédemment. On comprend que le deuxième échangeur 12 comprend ici uniquement deux passes de circulation du fluide réfrigérant : la première et la deuxième passes, respectivement référencées 52, 54.

Le deuxième collecteur 55 se trouve au dessus du premier collecteur 50 selon un axe parallèle au plan sensiblement vertical, dit premier axe 80. Quand le plan est vertical, l'axe est également vertical.

Le premier axe est avantageusement compris dans le plan sensiblement vertical. Le premier et le deuxième collecteur 50, 55 se situe sur ce premier axe 80. Le premier et le deuxième collecteur forment ainsi un même boîte collectrice, dite première boîte collectrice 57, c'est-à-dire une boîte collectrice unique. Une cloison 60 étanche au fluide réfrigérant sépare le premier collecteur 50 du deuxième collecteur 55.

La première et la deuxième passes 52, 54 comprennent, par exemple, un faisceau de tubes parallèles (non représenté) dont les extrémités sont reliées, de manière fixe et étanche, d'une part au premier collecteur 50 dans le cas de la première passe 52 et au deuxième collecteur dans le cas de la deuxième passe 54, et d'autre par à la deuxième boîte collectrice 53. En particulier, les tubes dans lesquels circule le fluide réfrigérant ont une section transversale oblongue et entre ceux-ci sont agencés des intercalaires augmentant l'efficacité d'échange thermique entre le fluide réfrigérant circulant dans le deuxième échangeur 12 et le flux d'air extérieur traversant celui-ci selon une direction sensiblement perpendiculaire au plan sensiblement vertical. La première et la deuxième passes 52, 54 définissent ainsi la surface d'échange 58 s'étendant dans le plan sensiblement vertical. L'intérieur des tubes peut aussi inclure des perturbateurs qui, à l'instar des intercalaires, augmentent l'efficacité de l'échange thermique et la tenue mécanique des tubes. Il pourra aussi s'agir de tubes extrudés. Dans ce cas, chaque tube définit, par exemple, une pluralité de canaux internes, parallèles, de circulation de fluide.

Selon l'invention, la première tubulure 51 se situe dans le quart inférieur du premier collecteur 50 selon le premier axe 80. Le fluide réfrigérant entre ainsi dans le deuxième échangeur 12 par une partie inférieure du premier collecteur 50 selon le premier axe 80.

La deuxième tubulure 56 se situe selon l'invention dans le quart inférieur du deuxième collecteur selon le premier axe. Le fluide réfrigérant sort ainsi du deuxième échangeur 12 par une partie inférieure du deuxième collecteur 55 selon le premier axe 80. Cette configuration est ainsi particulièrement avantageuse pour permettre l'optimisation de l'évacuation d'une phase liquide du fluide de refroidissement, en mode de refroidissement ou en mode de chauffage. Le fait d'avoir les tubulures 51 et 56 en bas de chaque collecteur 50 ou 55 permet d'évacuer facilement l'huile car celle-ci va avoir tendance par gravité à circuler en bas des collecteurs, réduisant ainsi tout risque de rétention dans l'échangeur.

On appelle H1 la hauteur de la première passe 52, H2 la hauteur de la deuxième passe 58 et H la hauteur de la surface d'échange 58 égale ici à la somme de H1 et H2. La hauteur H1 de la première passe 52, la hauteur H2 de la deuxième passe 54 et la hauteur H de la surface d'échange 58 sont mesurées parallèlement au plan sensiblement vertical. La première et de la deuxième passes 52, 54 comprennent une même largeur l, mesurée perpendiculairement aux hauteurs H1, H2, H et dans le plan sensiblement vertical. La surface d'échange 58 est donc égale au produit de la hauteur H de la surface d'échange 58 par la largeur l. La première passe 52 définit une première surface d'échange égale au produit de la hauteur H1 de la première passe 52 par la largeur l. La deuxième passe 54 définit une deuxième surface d'échange égale au produit de la hauteur H2 de la deuxième passe 52 par la largeur l.

Selon l'invention, la première passe occupe moins de 50% de la surface d'échange 58. La première et la deuxième passe 52, 54 étant caractérisées par la même largeur l, la hauteur H1 de la première passe 52 est donc plus petite que la hauteur H2 de la deuxième passe 54, c'est-à-dire qu'elle est plus petite que la moitié de la hauteur H de la surface d'échange 58.

La première passe 52 occupe, en particulier, sensiblement 50% de la surface d'échange 58. Autrement dit, la hauteur H1 de la première passe 52 représente, en particulier, sensiblement 30% de la hauteur H de la surface d'échange totale 58. Dans ce cas, la hauteur H2 de la deuxième passe 54 représente sensiblement 70% de la hauteur H de la surface d'échange totale 58.

Les tubes étant identiques et espacés entre eux de la même distance selon la hauteur H de la surface d'échange totale 58, la première passe 52 comprend moins de 50% du nombre total de tubes du deuxième échangeur 12, et notamment sensiblement 30%.

Le support 70 est, par exemple une caisse ou un châssis du véhicule automobile dans lequel la boucle de climatisation et donc le deuxième échangeur 12 est installé.

Alternativement, le support 70 est un module d'échangeurs de chaleur. Dans ce cas, le module d'échangeur de chaleur est monté sur une caisse ou un châssis du véhicule et il est destiné à recevoir exclusivement le deuxième échangeur 12 de l'invention, ou une pluralité d'échangeurs de chaleur parmi lesquels on trouve le deuxième échangeur de chaleur 12. Le support 70 est, notamment, une pièce en forme de « U » à l'intérieur de laquelle vient se loger le deuxième échangeur 12. On comprend ici que la première boîte collectrice 57 vient se loger contre une première branche latérale du module 70, c'est-à-dire une première branche latérale du U, la deuxième boîte collectrice 53 vient se loger contre une deuxième branche latérale du module, c'est-à-dire une deuxième branche latérale du U, et qu'une partie inférieure du deuxième échangeur 12 par rapport au premier axe 80 vient se loger contre une branche centrale du module 70, c'est-à-dire une branche centrale du U.

## Revendications

1. Ensemble comprenant un échangeur de chaleur (12) et un support (70) sur lequel ledit échangeur (12) est monté, ledit échangeur (12) comprenant une première passe (52) de circulation d'un fluide réfrigérant alimentée par un premier collecteur (50) muni d'une première tubulure (51) par lequel le fluide réfrigérant est apte à circuler, et une deuxième passe (54) de circulation du fluide réfrigérant alimentant un deuxième collecteur (55) muni d'une deuxième tubulure (56) par lequel le fluide réfrigérant est apte à circuler, la première et la deuxième passes (52, 54) définissant une surface d'échange (58) de chaleur qui s'étend dans un plan sensiblement vertical, la première tubulure (51) se situant dans le quart inférieur du premier collecteur (50) selon un premier axe (80) parallèle au plan de la surface d'échange de chaleur, **caractérisé en ce que** la deuxième tubulure (56) se situe dans le quart inférieur du deuxième collecteur (55) selon le premier axe (80) et au dessus de la première tubulure (51) selon ledit premier axe (80).

2. Ensemble selon la revendication 1 dans lequel le nombre de passes (52, 54) de circulation du fluide réfrigérant est exclusivement égal à deux.

3. Ensemble selon l'une quelconque des revendications précédentes, dans lequel la première passe (52) occupe moins de 50% de ladite surface d'échange (58).

4. Ensemble selon la revendication 3, dans lequel la première passe (52) occupe sensiblement 30% de ladite surface d'échange (58).

5. Ensemble selon l'une quelconque des revendications précédentes, dans lequel le premier collecteur (50) et le deuxième collecteur (55) définissent une même boîte collectrice (57).

6. Ensemble selon l'une quelconque des revendications précédentes, dans lequel ledit support (70) est une caisse ou un châssis de véhicule automobile.

7. Ensemble selon l'une quelconque des revendications 1 à 6, dans lequel ledit support (70) est un module d'échangeurs de chaleur.

8. Boucle de climatisation (1) apte à fonctionner dans un premier mode dit de « refroidissement » d'un habitacle (32) de véhicule et dans un deuxième mode dit de « chauffage » de l'habitacle (32) de véhicule, ladite boucle de climatisation (1) étant parcourue par un fluide réfrigérant et comprenant au moins un évaporateur, un compresseur, un organe de détente et un ensemble selon l'une quelconque des revendications 1 à 7.

9. Boucle de climatisation selon la revendication 8, dans lequel le fluide réfrigérant entre par la première tubulure à la fois en mode de chauffage et en mode de refroidissement.

## Patentansprüche

1. Anordnung, welche einen Wärmetauscher (12) und eine Halterung (70), auf welcher der Wärmetauscher (12) angebracht ist, umfasst, wobei der Wärmetauscher (12) einen ersten Durchlauf (52) zur Zirkulation eines Kältemittels, der von einem mit einem ersten Stutzen (51) versehenen ersten Endboden (50) gespeist wird, durch welches das Kältemittel zirkulieren kann, und einen zweiten Durchlauf (54) zur Zirkulation des Kältemittels, der einen mit einem zweiten Stutzen (56) versehenen zweiten Endboden (55) speist, durch welches das Kältemittel zirkulieren kann, umfasst, wobei der erste und der zweite Durchlauf (52, 54) eine Wärmeaustauschfläche (58) definieren, welche sich in einer im Wesentlichen vertikalen Ebene erstreckt, wobei sich der erste Stutzen (51) im unteren Viertel des ersten Endbodens (50) entlang einer zur Wärmeaustauschfläche parallelen ersten Achse (80) befindet, **dadurch gekennzeichnet, dass** sich der zweite Stutzen (56) im unteren Viertel des zweiten Endbodens (55) entlang der ersten Achse (80) und oberhalb des ersten Stutzens (51) entlang dieser ersten Achse (80) befindet.

2. Anordnung nach Anspruch 1, wobei die Anzahl der Durchläufe (52, 54) zur Zirkulation des Kältemittels ausschließlich gleich zwei ist.

3. Anordnung nach einem der vorhergehenden Ansprüche, wobei der erste Durchlauf (52) weniger als 50 % der Wärmeaustauschfläche (58) einnimmt.

4. Anordnung nach Anspruch 3, wobei der erste Durchlauf (52) ungefähr 30 % der Wärmeaustauschfläche (58) einnimmt.

5. Anordnung nach einem der vorhergehenden Ansprüche, wobei der erste Endboden (50) und der zweite Endboden (55) ein und denselben Sammelkasten (57) definieren.

6. Anordnung nach einem der vorhergehenden Ansprüche, wobei die Halterung (70) eine Karosserie oder ein Fahrgestell eines Kraftfahrzeugs ist.

7. Anordnung nach einem der Ansprüche 1 bis 6, wobei die Halterung (70) ein Modul von Wärmetauschern ist.

8. Klimatisierungskreislauf (1), welcher dafür ausgelegt ist, in einem ersten Modus, "Kühlmodus" genannt, eines Fahrzeuginnenraums (32) und in einem zweiten Modus, "Heizmodus" genannt, des Fahrzeuginnenraums (32) zu arbeiten, wobei der Klimatisierungskreislauf (1) von einem Kältemittel durchströmt wird und wenigstens einen Verdampfer, einen Verdichter, ein Entspannungsorgan und eine Anordnung nach einem der Ansprüche 1 bis 7 umfasst.

9. Klimatisierungskreislauf nach Anspruch 8, wobei das Kältemittel sowohl im Heizmodus als auch im Kühlmodus über den ersten Stutzen eintritt.

## Claims

1. Assembly comprising a heat exchanger (12) and a mount (70) on which the said exchanger (12) is mounted, the said exchanger (12) comprising a first pass (52) for the circulation of a refrigerant fed from a first collector (50) fitted with a first connection pipe (51) via which the refrigerant is able to circulate, and a second pass (54) for the circulation of the refrigerant, feeding a second collector (55) equipped with a second connection pipe (56) via which the refrigerant is able to circulate, the first and second passes (52, 54) defining a heat-exchange surface (58) which extends in a substantially vertical plane, the first connection pipe (51) being situated in the lower quarter of the first collector (50) along a first axis (80) parallel to the plane of the heat-exchange surface, **characterized in that** the second connection pipe (56) is situated in the lower quarter of the second collector (55) along the first axis (80) and above the first connection pipe (51) along the said first axis (80).

2. Assembly according to Claim 1, in which the number of passes (52, 54) for the circulation of the refrigerant is exclusively equal to two.

3. Assembly according to either one of the preceding claims, in which the first pass (52) occupies less than 50% of the said heat-exchange surface (58).

4. Assembly according to Claim 3, in which the first pass (52) occupies substantially 30% of the said heat-exchange surface (58).

5. Assembly according to any one of the preceding claims, in which the first collector (50) and the second collector (55) define the one same header tank (57).

6. Assembly according to any one of the preceding claims, in which the said mount (70) is a bodyshell or a chassis of a motor vehicle.

7. Assembly according to any one of Claims 1 to 6, in which the said mount (70) is a heat-exchanger module.

8. Air conditioning loop (1) able to operate in a first mode for "cooling" a vehicle interior (32) and in a second mode for "heating" the vehicle interior (32), the said air conditioning loop (1) having a refrigerant passing through it and comprising at least an evaporator, a compressor, an expansion member and assembly according to any one of Claims 1 to 7.

9. Air conditioning loop according to Claim 8, in which the refrigerant enters via the first connection pipe both in heating mode and in cooling mode.
